# EUROPEAN PATENT SPECIFICATION

(11) **EP 2 854 071 B1**
(45) Date of publication and mention of the grant of the patent: **28.02.2018**
(21) Application number: 14184841.6
(22) Date of filing: 15.09.2014
(51) Int. Cl.: G06F 21/88

(54) **Method, device and apparatus for unlocking a terminal**
Verfahren, Vorrichtung und Einrichtung zur Entriegelung eines Endgeräts
Procédé, dispositif et appareil permettant de déverrouiller un terminal

(30) Priority: 26.09.2013 CN 201310446823
(43) Date of publication of application: 01.04.2015
(73) Proprietor: Xiaomi Inc., Beijing 100085 (CN)
(72) Inventor: Bao, Song, Beijing (CN); Zhang, Bin, Beijing (CN); Feng, Zhiyong, Beijing (CN)
(74) Representative: Hanna Moore + Curley

(56) References cited:
- JP-A- 2005 229 151
- US-A1- 2005 272 410
- US-A1- 2007 255 946
- US-A1- 2014 007 223
- sun: "Android-App fotografiert Dieb", heise online news , 26 January 2013 (2013-01-26), XP002734299, Retrieved from the Internet: URL:http://www.heise.de/newsticker/meldung /Android-App-fotografiert-Dieb-1792137.htm l [retrieved on 2015-01-08]

## Description

This application claims the benefit of priority to Chinese Patent Application No. CN 201310446823.2, filed on September, 26, 2013.

### TECHNICAL FIELD

The present disclosure generally relates to the field of electronic devices, and more particularly to a method, a device and an apparatus for unlocking a terminal.

### BACKGROUND

Nowadays, with the continuous development of electronic communication technology, portable electronic devices have become indispensable in transmitting information between devices including mobile phones, tablet computers and the like. Since devices have often large storage capabilities and versatile functions, the user tends to develop a habit to store a large quantity of private information in the device which recommends a higher requirement for the security of the device. Currently, unlocking methods for an electronic device include inserting numeric passwords, squared figures, fingerprint recognition, voice recognition, face recognition, and the like. Although those methods may provide protection when a user other than the owner tries to unlock the machine, the existing unlocking methods may only prompt a wrong password message and request for another password, and cannot provide additional information. Also, the owner cannot discern that other users have tried to unlock the machine, which is a potential security hazard for the device.

### SUMMARY

A method, device and apparatus for unlocking a terminal is provided, in accordance with claims which follow.

According to a first aspect of the embodiments of the present disclosure, a computer-implemented method, device and apparatus for unlocking a terminal is provided, including:
receiving an unlocking instruction;
determining whether a current unlocking user belongs to a first preset user group according to the unlocking instruction; and
acquiring and storing information on the current unlocking user if the current unlocking user does not belong to the first preset user group.

The solution provided by the embodiments of the present disclosure may have the following advantageous effect: through the above solution, when the terminal device is tried to be unlocked, and the unlocking user is an invalid user who does not belong to the first preset user group, the information on the unlocking user is acquired for the owner of the machine to verify. Thereby, the owner may obtain the unlocking history of the machine, and security is improved.

If the current unlocking user does not belong to the first preset user group, an information acquisition device is started; the information acquisition device acquires information on the current unlocking user; wherein, the information on the current unlocking user includes face image information, voice information or fingerprint information of the current unlocking user.

By utilizing the information acquisition device such as a camera, a microphone or a fingerprint recording device, etc., it is convenient for the owner to recognize the identity of the invalid user.

If the current unlocking user does not belong to the first preset user group, after information on the current unlocking user is acquired and stored, it is determined whether the current unlocking user belongs to a second preset user group according to the information on the current unlocking user;
if the current unlocking user belongs to the second preset user group, a screen is unlocked and a restricted user mode is entered; and
an operation of the current unlocking user in the restricted user mode is recorded; wherein,
in the restricted user mode, a system and/or applications of the terminal only respond to preset operations which include start, inquiry, modification, addition and/or deletion.

Through the above solution, a secondary determination mechanism is performed based on the information on the unlocking user. If the unlocking user is a particular user, the restricted user mode is entered, in which a restricted permission is offered to a certain group of particular users and operations performed to the terminal by the particular user in the restricted user mode is recorded for the owner to verify. Thereby, not only the owner may obtain the unlocking history of the machine, but also may protect personal privacy, and may find out which operation the unlocking user has performed to the machine. So the security is further improved. Also, an emergency assistance may be provided for the restricted user.

If the current unlocking user belongs to the first preset user group, the terminal is unlocked, and the stored information and/or recorded operations by the unlocking user who does not belong to the first preset user group is displayed.

Through the above solution, after a correct unlocking instruction is received, the information on the unlocking users who have tried to unlock the machine is displayed, which serves as a notice.

After the recorded operation by the unlocking user who does not belong to the first preset user group is displayed, prompt information is output to prompt whether to undo the operation; and the operation is undone after the prompt information is confirmed.

Through the above solution, if it is found out that there have been operations performed to the machine by invalid users in the restricted user mode, an undo option may be provided for the owner to undo these operations, thereby the terminal may be restored to a previous status before the operations by the invalid users to facilitate the use of the owner.

If the current unlocking user does not belong to the first preset user group, after information on the current unlocking user is acquired and stored, it is determined whether the current unlocking user belongs to a second preset user group according to information on the current unlocking user; and if the current unlocking user does not belong to the second preset user group, a screen locked status is entered.

Through the above solution, a secondary determination mechanism is performed based on the information on the unlocking user. If the unlocking user neither is the owner nor does belong to a preset particular user group, only the information of the unlocking user is acquired and stored, and after the information is acquired, the screen locked status is entered, that is, the terminal is not unlocked, and the restricted user mode is not entered.

Before an unlocking instruction is received, it is determined whether to display a screen unlocking interface according to an inclined angle between a plane where an axis of the terminal is located and a horizontal plane; and if the inclined angle is greater than or equals to a preset threshold, the screen unlocking interface is displayed.

Through the above solution, if the unlocking user wants to input an unlocking instruction, he only needs to incline the terminal for a certain angle and a screen locked interface may be released, and the operation is easy.

The unlocking instruction is based on character password information, pattern information, face image information, voice information or fingerprint information.

According to a second aspect of the embodiments of the present disclosure, an unlocking apparatus for a terminal is provided, including:
a receiving module, configured to receive an unlocking instruction;
a determination module, configured to determine whether a current unlocking user belongs to a first preset user group according to the unlocking instruction; and
an information acquisition process module, configured to acquire and store information on the current unlocking user if the current unlocking user does not belong to the first preset user group.
the unlocking apparatus further includes: an information acquisition device and a device starting module;
wherein, the device starting module is configured to start the information acquisition device if the current unlocking user does not belong to the first preset user group;
the information acquisition device is configured to acquire the information on the current unlocking user, wherein, the information on the current unlocking user includes face image information, voice information or fingerprint information of the current unlocking user.

The unlocking apparatus further includes: a second determination module, configured to determine whether the current unlocking user belongs to a second preset user group according to information on the current unlocking user;
a second unlocking module, configured to unlock a screen and enter a restricted user mode, if the current unlocking user belongs to the second preset user group; and
a record process module, configured to record an operation of the current unlocking user in the restricted user mode; wherein,
in the restricted user mode, a system and/or applications of the terminal only respond to preset operations which include start, inquiry, modification, addition and/or deletion.

The unlocking apparatus further includes: a first unlocking module, configured to unlock the terminal if the current unlocking user belongs to the first preset user group; and
a display process module, configured to display the stored information on and/or recorded operation by the unlocking user who does not belong to the first preset user group.
the unlocking apparatus further includes: an information output module, configured to output prompt information to prompt whether to undo the operation; and an undo process module, configured to undo the operation after the prompt information is confirmed.

The unlocking apparatus further includes: a screen lock process module, configured to enter a screen locked status if the current unlocking user does not belong to the second preset user group.
the unlocking apparatus further includes: a third determination module, configured to determine whether to display a screen unlocking interface according to an inclined angle between a plane where an axis of the terminal is located and a horizontal plane; and
an interface process module, configured to display the screen unlocking interface if the inclined angle is greater than or equals to a preset threshold.

According to a third aspect of the embodiments of the present disclosure, a terminal device is provided, which includes a memory and one or more programs stored in the memory, and the terminal device is configured to execute the one or more programs by one or more processors, the one or more programs containing instructions to perform the following operations:
receiving an unlocking instruction;
determining whether a current unlocking user belongs to a first preset user group according to the unlocking instruction; and
acquiring and storing information on the current unlocking user if the current unlocking user does not belong to the first preset user group.

According to a fourth aspect of the embodiments of the present disclosure, there is provided a program product having stored therein instructions that, when executed by one or more processors of a terminal, causes the terminal to perform:
receiving an unlocking instruction;
determining whether a current unlocking user belongs to a first preset user group according to the unlocking instruction; and
acquiring and storing information on the current unlocking user if the current unlocking user does not belong to the first preset user group.

Through the present disclosure, information on invalid users may be recorded for the owner to verify, and it is convenient for the owner to obtain the history of unlocking the terminal, so the security coefficient is improved. For a terminal device with biometric recognition function, it is convenient to realize one device for multiple users through the present disclosure, and to offer different permission to different users, so it is desired for protection of the privacy information of the owner.

Other characters and advantages of the present disclosure will be set forth in the following description, and will in part become apparent from the description, or may be appreciated through the practice of the present disclosure. The objects and other advantages of the present disclosure may be realized and obtained through the structures particularly pointed out in the written description, the claims and the accompany drawings.

The technical solution of the present disclosure will be described in a further detail with reference to accompany drawings and embodiments.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.

The accompany drawings which constitute a part of the description and serve to explain the present disclosure together with the embodiments of the present disclosure, are provided for a better understanding of the present disclosure. In the drawings:
Fig.1 is an exemplary flowchart showing a method for unlocking a terminal according to an exemplary embodiment;
Fig.2 is an exemplary flowchart showing a method for unlocking a terminal according to an exemplary embodiment;
Fig.3 is an exemplary flowchart showing a method for unlocking a terminal according to an exemplary embodiment;
Fig.4 is an exemplary flowchart showing a method for unlocking a terminal according to an exemplary embodiment;
Fig.5 is an exemplary flowchart showing a method for unlocking a terminal according to an exemplary embodiment;
Fig.6 is an exemplary flowchart showing a method for unlocking a terminal according to an exemplary embodiment;
Fig.7 is an exemplary flowchart showing a method for unlocking a terminal according to an exemplary embodiment;
Fig.8 is an exemplary flowchart showing a screen unlocking for a mobile phone with a face recognition function according to an exemplary embodiment;
Fig.9 is a block diagram showing an unlocking apparatus for a terminal according to an exemplary embodiment;
Fig.10 is a block diagram showing an unlocking apparatus for a terminal according to an exemplary embodiment;
Fig.11 is a block diagram showing an unlocking apparatus for a terminal according to an exemplary embodiment;
Fig.12 is a block diagram showing an unlocking apparatus for a terminal according to an exemplary embodiment;
Fig.13 is a block diagram showing an unlocking apparatus for a terminal according to an exemplary embodiment;
Fig.14 is a block diagram showing an unlocking apparatus for a terminal according to an exemplary embodiment;
Fig.15 is a block diagram showing a terminal device according to an exemplary embodiment.

Explicit embodiments of the present disclosure that have been illustrated in the above accompany drawings will be described in more detail hereinafter.

### DETAILED DESCRIPTION

The embodiments of the present disclosure will be described with reference to the accompany drawings. It should be appreciated that the embodiments described herein only serves to illustrate and explain, rather to limit the embodiments of the present disclosure.

A method for unlocking a terminal is provided by the embodiments of the present disclosure, through which when an invalid user tries to unlock a machine, not only the machine is not allowed to be unlocked, but also an information acquisition device is started to acquire information on the unlocking user. Thereby, the method may provide a notice for the owner of the machine to check the information after he unlocks the machine, to find out which invalid user has tried to unlock the machine.

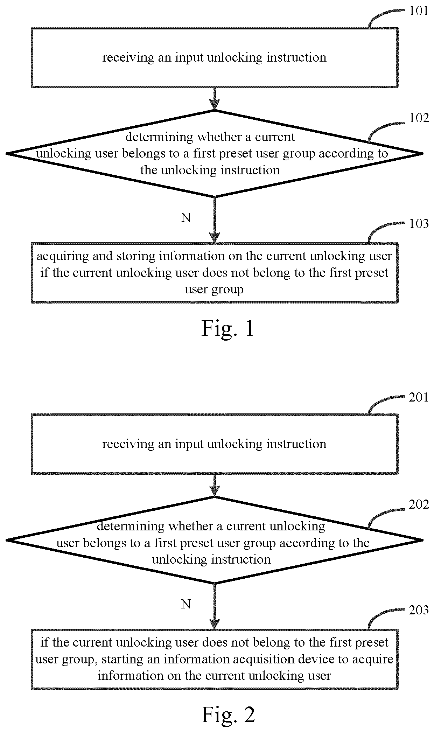

Fig.1 is a flowchart showing a method for unlocking a terminal according to an embodiment of the present disclosure, which includes the following steps.

In step S101, an unlocking instruction is received, (the method according to this embodiment is performed in the terminal).

In step S102, it is determined whether a current unlocking user belongs to a first preset user group according to the unlocking instruction.

In step 103, if the current unlocking user does not belong to the first preset user group, information on the current unlocking user is acquired and stored.

If the current unlocking user belongs to the first preset user group, the process is finished and the machine is unlocked as normal to display a home page.

In a practical application, the unlocking instruction is input through a screen locked interface by a user, which is based on information of a character password, a pattern information, including a preset numeric password, a particular pattern, or biometric recognition information, a face image, voice information, or fingerprint information, etc. Taking a numeric password for example, if the unlocking user is an invalid user, the input password does not match the preset password, the terminal determines that the unlocking user is not the owner of the machine upon receipt of the wrong password, and acquires and stores information on the unlocking user for the owner to check who has tried to unlock the machine after he unlocks the terminal.

An information acquisition device may be used to acquire information on the unlocking user according to an embodiment of the present disclosure. Fig.2 is a flowchart showing an unlocking method according to another embodiment of the present disclosure, which includes the following steps.

In step S201, an unlocking instruction is received, (the method according to this embodiment is performed in the terminal).

In step S202, it is determined whether a current unlocking user belongs to a first preset user group according to the unlocking instruction; if he does not belong to the first preset user group, the process is continued to step 203; otherwise the process is finished, and the machine is unlocked as normal to display a home page.

In step S203, if the current unlocking user does not belong to the first preset user group, an information acquisition device is started to acquire information on the current unlocking user. Wherein, the information on the current unlocking user includes face image information, voice information or fingerprint information thereof.

In a practical application, the above information acquisition device includes a camera, a microphone or a fingerprint recording device, etc. Taking a camera for example, after an invalid user inputs a wrong unlocking instruction, the terminal starts the camera provided thereon, adjusts the camera toward the unlocking user in front of the screen to capture a picture, and stores the picture in the machine or in a cloud. The owner of the machine may recognize the identity of the unlocking user based on the picture upon checking on the picture. In addition, if the unlocking instruction of the machine is based on biometric recognition technology, a microphone or a fingerprint recording device may be utilized to easily record voice information or fingerprint information of the unlocking user. Also, the identity of the unlocking user may be determined by comparing with existing voice information or fingerprint information.

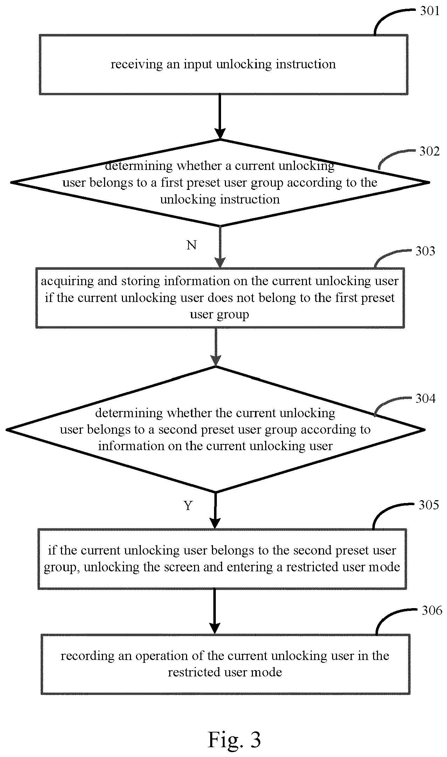

In an embodiment of the present disclosure, a secondary determination mechanism against the unlocking user may be provided, in order to identify particular users such as family members and friends of the owner of the machine and to provide corresponding permission for those particular users. Fig.3 is a flowchart showing an unlocking method according to another embodiment of the present disclosure, which includes the following steps.

In step S301, an unlocking instruction is received, (the method according to this embodiment is performed in the terminal).

In step S302, it is determined whether a current unlocking user belongs to a first preset user group according to the unlocking instruction; if he does not belong to the first preset user group, the process is continued to step 303; otherwise the process is finished, and the machine is unlocked as normal to display a home page.

In step S303, if the current unlocking user does not belong to the first preset user group, information on the current unlocking user is acquired and stored.

In step S304, it is determined whether the current unlocking user belongs to a second preset user group according to information on the current unlocking user; if he belongs to the second preset user group, the process is continued to step 305; otherwise the process is finished.

In step S305, if the current unlocking user belongs to the second preset user group, the screen is unlocked and a restricted user mode is entered;

In step S306, an operation of the current unlocking user is recorded in the restricted user mode.

Wherein, in the restricted user mode, the system and/or applications of the terminal device only respond to preset operations which include start, inquiry, modification, addition and/or deletion.

In a practical application, if he wants his family members or friends to have permission to use the machine, the owner of the machine may register their biometric recognition information in advance for them to wake up the machine upon unlocking the machine. Taking a child of the owner for example, a picture of the child may be stored locally by the owner of the machine, and then when the child tries to unlock and inputs a wrong password, the camera will capture a picture of the child, and the terminal system compares the captured picture with each of a plurality of pictures stored in advance. If the current unlocking user is determined to be one from the preset user group rather than a stranger through face recognition technology, the screen will be unlocked and a wake status is entered.

Further, in an embodiment of the present disclosure, respective user modes may be set for a particular user such as a family member or a friend in advance, in which the particular user can unlock the screen, but only to perform restricted operations on the operation system or loaded applications of the machine. Still taking the child of the owner for example, a user mode for the child is set in advance in which after the terminal is unlocked, only applications of games are available, while applications of purchases are not available, neither any instruction to perform modifications, additions or deletions are available, to prevent a misoperation by the child from making any purchases or other changes. Different user modes are set for different particular users by the owner of the machine. So privacy information may be set as inaccessible to protect the privacy information. In the embodiment of the present disclosure, full user permission may be set for a particular user.

Further, in an embodiment of the present disclosure, operations including start, inquiry, modification, addition and/or deletion, etc. performed to the system and applications of the terminal device by a particular user to the machine may be recorded.

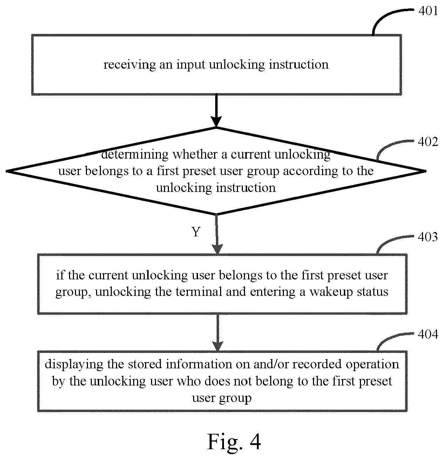

In an embodiment of the present disclosure, information on an unlocking user is displayed after the machine is unlocked by the owner. Fig.4 is a flowchart showing an unlocking method according to another embodiment of the present disclosure, which includes the following steps.

In step S401, an unlocking instruction is received, (the method according to this embodiment is performed in the terminal).

In step S402, it is determined whether a current unlocking user belongs to a first preset user group according to the unlocking instruction; if he belongs to the first preset user group, the process is continued to step 403; otherwise the process is finished, and the successive processes may be referred to step 203 and 303.

In step S403, if the current unlocking user belongs to the first preset user group, the terminal is unlocked.

In step S404, the stored information on and/or recorded operation by the unlocking user who does not belong to the first preset user group are displayed.

Wherein, the information of the unlocking user who does not belong to the first preset user group includes face image information, voice information or fingerprint information thereof.

Wherein, the operation by an unlocking user who does not belong to the first preset user group includes start, inquiry, modification, addition and/or deletion to the system and applications of the terminal device by the unlocking users who do not belong to the first preset user group in the restricted user mode.

In practical application, when the screen is unlocked after the owner inputs correct unlocking instruction, and a normal user mode is entered, the previously acquired information on unlocking users other than the owner, that is, the captured pictures, recorded voices or received fingerprints, etc. are displayed, and if there is a particular user preset by the owner among the unlocking users, a record of an operation to the machine by the particular user is also displayed.

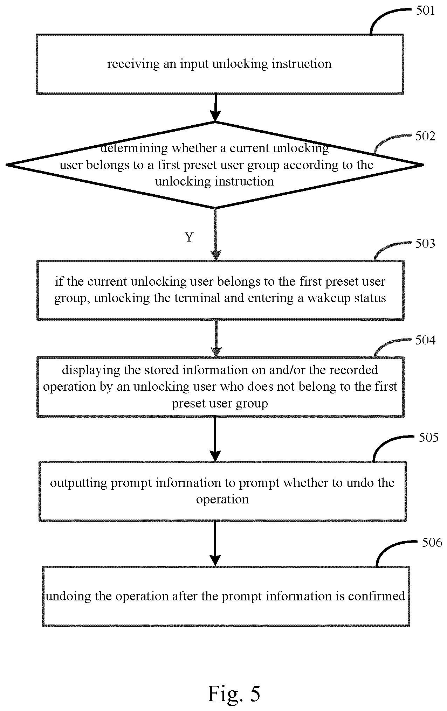

Through the embodiment of the present disclosure, the operation by the particular user to the machine may be undone. Fig.5 is a flowchart showing an unlocking method according to another embodiment of the present disclosure, which includes the following steps.

In step S501, an unlocking instruction is received, (the method according to this embodiment is performed in the terminal).

In step S502, it is determined whether a current unlocking user belongs to a first preset user group according to the unlocking instruction; if he belongs to the first preset user group, the process is continued to step 503; otherwise the process is finished, and the successive processes may be referred to step 203 and 303.

In step S503, if the current unlocking user belongs to the first preset user group, the terminal is unlocked.

In step S504, the stored information on and/or the recorded operation by an unlocking user who does not belong to the first preset user group is displayed.

In step S505, prompt information is output to prompt whether to undo the operation.

In step S506, the operation is undone after the prompt information is confirmed.

In a practical application, the embodiment of the present disclosure provides an undo function for undoing the operation by the particular user to the machine to restore the system and application to the previous status, by prompting an undo option after the record of the operation by the particular user to the machine is displayed to the owner and restoring the system and the application to the status previous to the operation after the owner approves the undo option. For example, a girlfriend of the owner is one of the particular users, and a restricted user mode is entered after the machine is unlocked by her, in which she loads a map application to the machine, deletes a weather forecast application, and modifies a setup of an avatar for an instant communication application. When the owner uses the machine, he finds out the above operations performed by his girlfriend, and selects an option of "confirm to undo" in a dialog box that is popped out to prompt whether to undo the operations. Then the map application is deleted, the weather forecast application is restored, and the setup of the avatar for the instant communication application is restored, that is, the setup of the machine is restored to the status previous to the operations by the girlfriend. In an embodiment of the present disclosure, the original setup may be restored with one key pressed, or the operations may be selectively undone one by one, so as to keep traces of the interested operations.

In an embodiment of the present disclosure, after the owner unlocks the machine, only information on invalid users acquired by the system during the time from the last unlocking by the owner to the current unlocking by the owner is displayed. Historical information earlier than that time may be displayed through inquiring. The advantage of this lies in that it is convenient for the owner to quickly obtain the recent unlocking events.

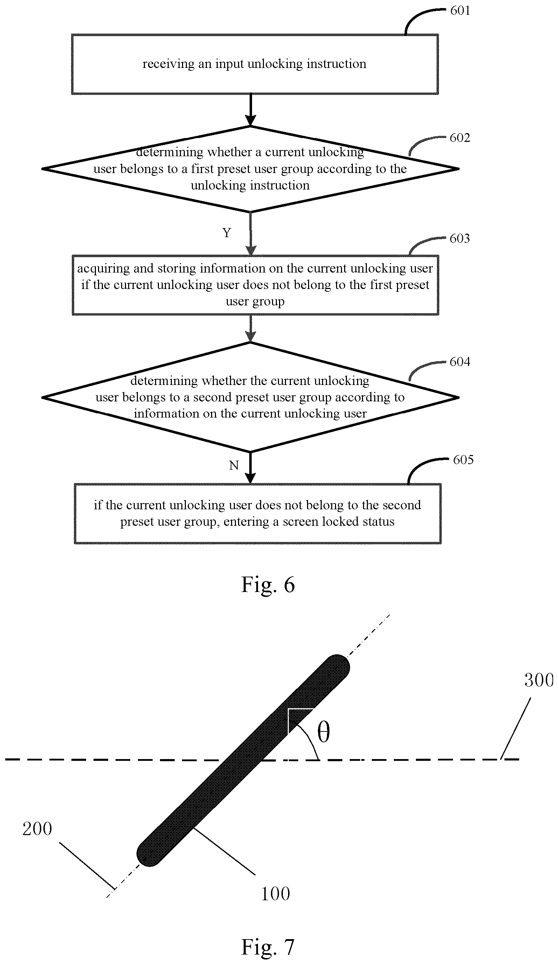

In an embodiment of the present disclosure, double identification determinations to the current unlocking user may be performed. Fig.6 is a flowchart showing an unlocking method according to another embodiment of the present disclosure, which includes the following steps.

In step S601, an unlocking instruction is received, (the method according to this embodiment is performed in the terminal).

In step S602, it is determined whether a current unlocking user belongs to a first preset user group according to the unlocking instruction; if he belongs to the first preset user group, the process is continued to step 603; otherwise the process is finished, and the machine may be unlocked as normal to display a home page.

In step S603, if the current unlocking user does not belong to the first preset user group, information on the current unlocking user is acquired and stored.

In step S604, it is determined whether the current unlocking user belongs to a second preset user group according to information on the current unlocking user; if he belongs to the second preset user group, the process is continued to step 605; otherwise the process is finished, and the successive process may be referred to step 305.

In step S605, if the current unlocking user does not belong to the second preset user group, a screen locked status is entered.

In a practical application, for an unlocking user who is not the owner or a particular user, identification information is acquired and the terminal is not unlocked.

In an embodiment of the present disclosure, it is determined when a screen unlocking interface is started by utilizing an inclined angle of the device. Before the unlocking instruction is received, it is determined whether the screen unlocking interface is displayed according to an inclined angle between a plane where an axis of the terminal device is located and a horizontal plane; and if the inclined angle is greater than or equals to a preset threshold, the screen unlocking interface is displayed.

Fig.7 is a schematic view showing a relationship of the angles of the terminal device placed in a region, according to an embodiment of the present disclosure. As shown in Fig.7 which is a side view, a terminal device 100 is a mobile phone, an included angle between a plane 200 where axis of the mobile phone is located and a horizontal plane 300 is θ that is between 0° to 180°. When an unlocking user picks up the mobile phone, the mobile phone automatically detects a value of θ. If the value of θ reaches a preset threshold (for example, 30°, 60°, 90°, etc.), the screen unlocking interface is started, and the unlocking instruction input by the user may be received. The advantage of this configuration lies in that, the screen may be started only by the user changing the placing direction of the mobile phone without mechanical operation, so it is convenient for use and the user experience is improved.

Further, the terminal device 100 may also be a tablet computer, an e-book or a wearable device, etc. The screen unlocking interface may be started only after the value of θ is greater than or equals to the preset threshold and holds it for a certain of time interval, for example, θ is 90° for 5 seconds or more, to avoid the screen unlocking interface being frequently started and caused by random placements of the mobile phone carried in daily lives.

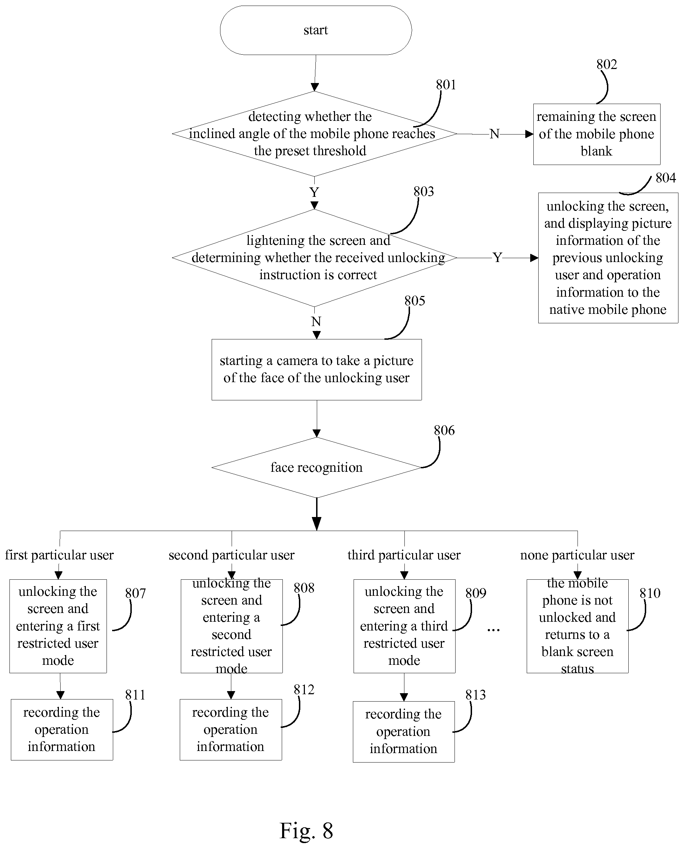

Fig.8 is a flowchart showing a screen unlocking for a mobile phone with a face recognition function, according to an embodiment of the present disclosure. Firstly, the user picks up the mobile phone, inclines it to an angle that reaches a threshold and then holds it for 5 seconds. The mobile phone detects whether its inclined angle reaches the preset threshold (step 801). If it does not reach the preset threshold, the screen of the mobile phone remains blank (step 802), if it does, the screen is lightened and an interface for inputting passwords is displayed. An unlocking instruction is received and it is determined whether the received unlocking instruction is correct (step 803). If the unlocking instruction is correct, the screen is unlocked, and the mobile phone may be used as normal. If there is anyone has tried to unlock the mobile phone previously, picture information of the previous unlocking user and operation information to the mobile phone are displayed (step 804). Also, the mobile phone displays recorded information of operations and provides undo option with one key pressed, etc. If the unlocking instruction is not correct, the user is indicated as an invalid user, a camera is started to take a picture of the face of the unlocking user (step 805). The captured picture is compared with pictures of a preset user group by utilizing face recognition technology (step 806). If the current unlocking user is one of the particular users, the screen is unlocked and a restricted user mode corresponding to the particular user is entered (step 807, 808 or 809), and the operation information is recorded (step 811, 812 or 813). For example, there are three preset groups of particular users, respectively a first particular user, a second particular user and a third particular user. If it is determined as the first particular user after recognition, the process is continued to step 807 and 811. If it is determined as the second particular user after recognition, the process is continued to step 808 and 812. If it is determined as the third particular user after recognition, the process is continued to step 809 and 813. And if the current unlocking user in not any one of the particular user, it is indicated as an invalid user, and he has no permission to use the mobile phone, and the mobile phone is returned to a blank screen status (step 810).

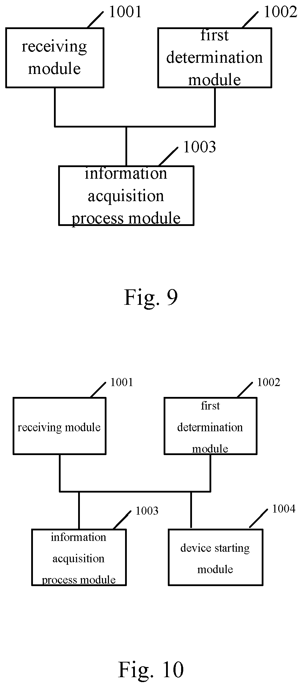

An unlocking apparatus for a terminal is also provided by another embodiment of the present disclosure, which is shown in a block diagram of Fig.9 and includes:
a receiving module 1001, configured to receive an unlocking instruction;
a first determination module 1002, configured to determine whether a current unlocking user belongs to a first preset user group according to the unlocking instruction; and
an information acquisition process module 1003, configured to acquire and store information on the current unlocking user if the current unlocking user does not belong to the first preset user group.

An unlocking apparatus for a terminal is also provided by another embodiment of the present disclosure, which is shown in a block diagram of Fig.10. The difference compared with the embodiment shown in Fig.9 lies in that, the unlocking apparatus further includes a device starting module 1004, configured to start an information acquisition device if the current unlocking user does not belong to the first preset user group.

Wherein, the information acquisition device includes a camera, a microphone or a fingerprint recording device, etc., and acquires face image information, voice information and fingerprint information, etc. about the current unlocking user after being started.

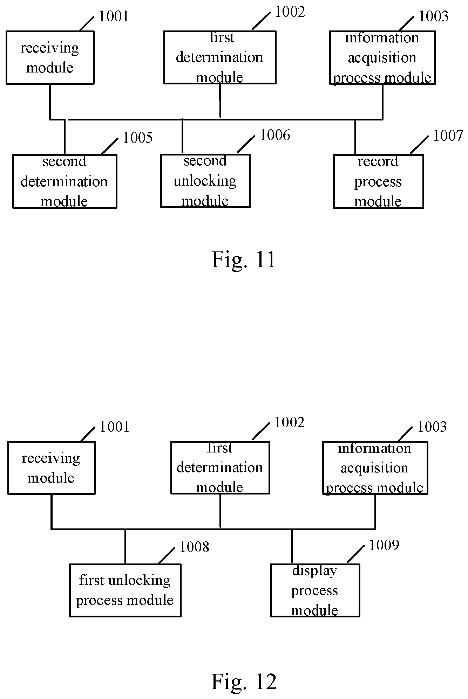

An unlocking apparatus for a terminal is also provided by another embodiment of the present disclosure, which is shown in a block diagram of Fig.11. The difference compared with the embodiment shown in Fig.9 lies in that, the unlocking apparatus further includes a second determination module 1005, a second unlocking module 1006 and a record process module 1007.

The second determination module 1005 is configured to determine whether the current unlocking user belongs to a second preset user group according to information on the current unlocking user.

The second unlocking module 1006 is configured to unlock the screen and enter a restricted user mode, if the current unlocking user belongs to the second preset user group.

The record process module 1007 is configured to record an operation of the current unlocking user in the restricted user mode.

Wherein, in the restricted user mode, the system and/or applications of the terminal device only respond to preset operations which include start, inquiry, modification, addition and/or deletion.

An unlocking apparatus for a terminal is also provided by another embodiment of the present disclosure, which is shown in a block diagram of Fig.12. The difference compared with the embodiment shown in Fig.9 lies in that, the unlocking apparatus further includes a first unlocking module 1008 and a display process module 1009.

The first unlocking module 1008 is configured to unlock the terminal if the current unlocking user belongs to the first preset user group. The display process module 1009 is configured to display the information of the unlocking user who does not belong to the first preset user group.

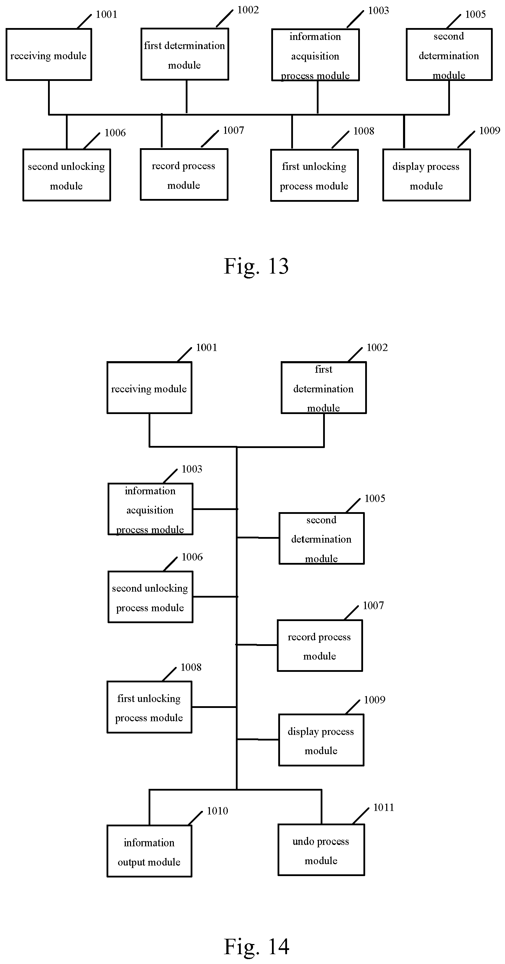

An unlocking apparatus for a terminal is also provided by another embodiment of the present disclosure, which is shown in a block diagram of Fig.13. The difference compared with the embodiment shown in Fig.11 lies in that, the unlocking apparatus further includes a first unlocking module 1008 and a display process module 1009.

The first unlocking module 1008 is configured to unlock the terminal, if the current unlocking user belongs to the first preset user group; the display process module 1009 is configured to display an operation by the unlocking user who does not belong to the first preset user group.

An unlocking apparatus for a terminal is also provided by another embodiment of the present disclosure, which is shown in a block diagram of Fig.14. The difference compared with the embodiment shown in Fig.13 lies in that, the unlocking apparatus further includes an information output module 1010 and an undo process module 1011.

The information output module 1010 is configured to output prompt information to prompt whether to undo the operation.

The undo process module 1011 is configured to undo the operation after the prompt information is confirmed.

An unlocking apparatus for a terminal is also provided by another embodiment of the present disclosure. The difference compared with the embodiment shown in Fig.9 lies in that, the unlocking apparatus further includes an inclined angle determination module and an interface process module.

The inclined angle determination module is configured to determine whether to display a screen unlocking interface according to an inclined angle between a plane where an axis of the terminal device is located and a horizontal plane, and determines to display if the inclined angle reaches a preset threshold. The interface process module is configured to display the screen unlocking interface if the inclined angle is greater than or equals to the preset threshold.

Through the embodiment of the present disclosure, information on invalid users may be recorded for the owner to verify, and the owner will find out who have used the machine when he unlocks the machine at the next time. It is convenient for the owner to obtain the history of unlocking the terminal, to warn the owner to exclude potential security hazards. For a terminal device with biometric recognition function, it is convenient to realize one device for multiple users through the present disclosure, and to offer different permission to different users. The owner can find out which operations have been done by the users, and restore with one key to remove the effect of the operations of the users, so the maintenance burden of the terminal is reduced by the owner in a more efficient way.

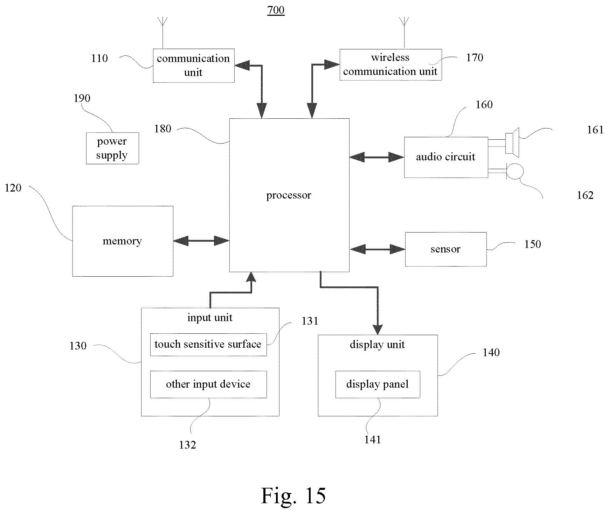

A terminal device is also provided by the present disclosure. Referring to Fig.15, the terminal device that is configured to perform the unlocking method for a terminal device according to above embodiments may be a mobile phone, a tablet pad, a wearable mobile terminal such as a smart watch, and the like.

The terminal device 700 may include a communication unit 110, a memory 120 including one or more computer-readable storage media, an input unit 130, a display unit 140, a sensor 150, an audio circuit 160, a wireless communication unit 170, a processor 180 including one or more processing cores, and a power supply 190 and other components. It should be appreciated by those skilled in the art that, the structure of the terminal device shown in Fig.5 does not constitute a limitation to the terminal device, and it may include more or less components than what is illustrated, or combine some of the components, or have different component arrangements. Wherein,

The communication unit 110 may be configured to transmit and receive information, or to transmit and receive signal during a procedure of calling. The communication unit 110 may be a network communication device such as a RF (Radio Frequency) circuit, a router, a modem, etc. In particular, when the communication unit 110 is a RF circuit, the communication unit 110 receives downlink information from a base station, and then transfers the information to one or more processors 180 to be processed. Also, the communication unit 110 transmits uplink data to the base station. Generally, the RF circuit as a communication unit includes but not limited to an antenna, at least one amplifier, a tuner, one or more oscillators, a subscriber identity module (SIM) card, a transceiver, a coupler, an LNA (Low Noise Amplifier), a duplexer, etc. Furthermore, the communication unit 110 may communicate with a network and other devices through wireless communication. The wireless communication may use any communication standards or protocols, including but not limited to GSM (Global System of Mobile communication), GPRS (General Packet Radio Service), CDMA (Code Division Multiple Access), WCDMA (Wideband Code Division Multiple Access), LTE (Long Term Evolution), e-mail, SMS (Short Messaging Service), etc. The memory 120 may be configured to store software programs and modules. The processor 180 performs various functional applications and data processing by running the software programs and modules stored in the memory 120. The memory 120 may mainly include a program storage area and a data storage area, wherein the program storage area may store operating systems, application programs required by at least one function (such as a function of sound playback, a function of image playback, etc.), etc.; and the data storage area may store data created during operation of the terminal device 700 (such as audio data, phone book, etc.), etc. In addition, the memory 120 may include a high-speed random access memory and may also include a non-volatile memory. For example, the memory 120 may include at least one disk storage device, a flash memory device, or other volatile solid-state memory devices. Accordingly, the memory 120 may also include a memory controller to provide access to the memory 120 performed by the processor 180 and the input unit 130.

The input unit 130 may be configured to receive input numbers or characters, and generate keyboard, mouse, joystick, optical or trackball input signals related to a user setting and the functional control. The input unit 130 may include a touch sensitive surface 131 and other input devices 132. The touch sensitive surface 131, also known as a touch screen or a track pad, may collect user's touch operations on or near the touch sensitive surface 131 (such as an operation performed by users using any suitable object or accessory such as a finger, a touch pen and the like on or near the touch sensitive surface 131), and drive a corresponding connected device according to a preset program. Optionally, the touch sensitive surface 131 may include two parts of a touch detection device and a touch controller. Wherein, the touch detection device detects a touching position of the user, detects a signal caused by the touch operation, and transmits the signal to the touch controller. The touch controller receives touch information from the touch detection device, transforms it into coordinates of the touch point, and sends the coordinates to the processor 180. The touch controller may also receive a command from the processor 180 and execute the command. In addition, the touch sensitive surface 131 may be realized in various types, such as resistive type, capacitive type, infrared type and surface acoustic wave type, etc. In addition to the touch sensitive surface 131, the input unit 130 may also include other input devices 132. The other input devices 132 may include but not limited to one or more of a physical keyboard, functional keys (such as volume control keys, switch buttons, etc.), a trackball, a mouse, and a joystick.

The display unit 140 may be configured to display information input by the user or information provided for the user and various graphical user interfaces of the terminal device 700. These graphical user interfaces may consist of graphics, texts, icons, videos, and any combination thereof. The display unit 140 may include a display panel 141, and optionally, the display panel 141 may be configured with LCD (Liquid Crystal Display), OLED (Organic Light-Emitting Diode), etc. Further, the touch sensitive surface 131 may cover the display panel 141. When a touch operation on or near the touch sensitive surface 131 is detected by the touch sensitive surface 131, the touch operation is sent to the processor 180 to determine the type of touch event, and corresponding visual output will be provided on the display panel 141 by the processor 180 according to the type of touch event. Although in Fig,30, the touch sensitive surface 131 and the display panel 141 are two separate components to realize input and output functions, in some embodiments, the touch sensitive surface 131 and the display panel 141 may be integrated to realize input and output functions.

The terminal device 700 may further include at least one kind of sensor 150, such as a light sensor, a motion sensor and other sensors. The light sensor may include an ambient light sensor and a proximity sensor. Wherein, the ambient light sensor may adjust the brightness of the display panel 141 according to the brightness of the ambient light. The proximity sensor may turn off the display panel 141 and/or backlight when the terminal device 700 moves close to ear. As one kind of the motion sensor, a gravity acceleration sensor may detect the acceleration in each direction (typically on three axes), and may detect the magnitude and the direction of gravity when it is stationary, which may be used in the applications for recognizing the attitudes of the mobile phone (such as horizontal and vertical screen switching, related games, attitude calibration of a magnetometer), functions related to vibration recognizing (such as a pedometer, clicking), etc. The terminal device 700 may also be equipped with other sensors such as a gyroscope, a barometer, a hygrometer, a thermometer, an infrared sensor, etc., which will not be redundantly described herein.

The audio circuit 160, a speaker 161 and a microphone 162 may provide an audio interface between the user and the terminal device 700. The audio circuit 160 may transform received audio data into electrical signals which are transmitted to the speaker 161 and transformed into sound signals to be output by the speaker 161. On the other hand, the microphone 162 transforms collected sound signals into electrical signals which are received and transformed into audio data by the audio circuit 160. After being output to the processor 180 to be processed, the audio data is transmitted to, for example, another terminal device via the RF circuit 110, or output to the memory 120 for further processing. The audio circuit 160 may also include an ear bud jack to allow a communication between an external earphone and the terminal device 700.

In order to achieve wireless communication, the terminal device may be equipped with a wireless communication unit 170 which may be a WiFi (Wireless Fidelity) module. WiFi is a short-range wireless transmission technology. The terminal device 700 allows the user to send and receive emails, browse webpages and access streaming media, etc. through the wireless communication unit 170, which provides the user with a wireless broadband Internet access. Although Fig.15 shows the wireless communication unit 170, it should be appreciated that, the wireless communication unit 170 is not a necessary component of the terminal device 700, and may be omitted as desired without changing the essential scope of the disclosure.

The processor 180 is a control center of the terminal device 700 that connects various parts of the entire mobile phone through various interfaces and circuits, performs various functions and data processing of the terminal device 700 by running or executing the software programs and/or modules stored in the memory 120 and by invoking data stored in the memory 120, so as to monitor the overall mobile phone. Optionally, the processor 180 may include one or more processing cores. The processor 180 may be integrated with an application processor that mainly processes operating systems, user interfaces and application programs, and a modem processor that mainly processes the wireless communication. It should be appreciated that, the above modem processor may not be integrated into the processor 180.

The terminal device 700 may also include a power supply 190 (such as a battery) to supply power to each component. The power supply may be logically connected to the processor 180 through a power supply management system, so as to achieve the functions such as charge, discharge and power consumption managements, etc. through the power supply management system. The power supply 190 may also include one or more components of a DC or AC power, a recharge system, a power failure detection circuit, a power converter or an inverter, a power status indicator, etc. Although not shown, the terminal device 700 may also include a camera, a Bluetooth module, etc., which are not redundantly described herein.

In the present embodiment, specifically, the terminal device includes a memory and one or more programs stored in the memory, and the terminal device is configured to execute the one or more programs by one or more processors, the one or more programs containing instructions to perform the following operations:
receiving an unlocking instruction;
determining whether a current unlocking user belongs to a first preset user group according to the unlocking instruction; and
acquiring and storing information on the current unlocking user if the current unlocking user does not belong to the first preset user group.

The memory also contains instructions to perform the following operations: starting an information acquisition device if the current unlocking user does not belong to the first preset user group. The information acquisition device acquires information on the current unlocking user. Wherein, the information on the current unlocking user includes face image information, voice information or fingerprint information thereof.

The memory also contains instructions to perform the following operations: after information on the current unlocking user is acquired and stored if the current unlocking user does not belong to the first preset user group, determining whether the current unlocking user belongs to a second preset user group according to information on the current unlocking user;
unlocking the screen and entering a restricted user mode, if the current unlocking user belongs to the second preset user group; and
recording an operation of the current unlocking user in the restricted user mode. Wherein,
in the restricted user mode, the system and/or applications of the terminal device only respond to preset operations which include start, inquiry, modification, addition and/or deletion.

The memory also contains instructions to perform the following operations: unlocking the terminal if the current unlocking user belongs to the first preset user group; and displaying the stored information on and/or recorded operation by the unlocking user who does not belong to the first preset user group.

The memory also contains instructions to perform the following operations: after the displaying the recorded operation by the unlocking user who does not belong to the first preset user group, outputting prompt information to prompt whether to undo the operation; and undoing the operation after the prompt information is confirmed.

The memory also contains instructions to perform the following operations: after information on the current unlocking user is acquired and stored if the current unlocking user does not belong to the first preset user group, determining whether the current unlocking user belongs to a second preset user group according to information on the current unlocking user; and
entering a screen locked status if the current unlocking user does not belong to the second preset user group.

The memory also contains instructions to perform the following operations: before the unlocking instruction is received, determining whether to display a screen unlocking interface according to an inclined angle between a plane where an axis of the terminal device is located and a horizontal plane; and displaying the screen unlocking interface if the inclined angle is greater than or equals to a preset threshold.

Through the embodiment of the present disclosure, information on invalid users may be recorded for the owner to verify, and the owner will find out who have used the machine when he unlocks the machine at the next time. It is convenient for the owner to obtain the history of unlocking the terminal, to warn the owner to exclude potential security hazards. For a terminal device with biometric recognition function, it is convenient to realize one device for multiple users through the present disclosure, and to offer different permissions to different users. The owner can find out which operations have been done by the users, and restore with one key to remove the effect of the operations of the users, so the maintenance burden of the terminal by the owner is reduced in a more efficient way.

It should be appreciated by those skilled in the art that, the embodiments of the present disclosure may be provided as a method, system or computer program product. Therefore, the present disclosure may take the form of an entirely hardware embodiment, an entirely software embodiment, or a combination of software and hardware embodiments. Moreover, the present disclosure may take a form of a computer program product executed on one or more computer available storage medium (including, but not limited to, a disk storage, and an optical memory, etc.) containing computer available program codes.

The present disclosure is described with reference to the flowchart and/or block diagram showing the method, device (system), and a computer product according to the embodiments of the present disclosure. It should be appreciated that each process and/or block of the flowchart and/or block diagram and combinations of the processes and/or blocks in the flowchart and/or block diagram may be implemented by computer program instructions. These computer program instructions may be provided to a central processor of a general purpose computer, a special purpose computer, an embedded processor or other programmable data process apparatus to produce a machine, such that a means is produced that implements the functions specified in the one or more processes of the flowchart and/or the one or more blocks in the block diagram through the instructions executed by the central processor of the computer or other programmable data process apparatus.

These computer program instructions may also be stored in a computer-readable memory that can direct a computer or other programmable data process apparatus to function in a particular manner, such that the instructions stored in the computer-readable memory produce a manufactured article including instruction means that implements the functions specified in the one or more processes of the flowchart and/or the one or more blocks in the block diagram.

These computer program instructions may also be loaded onto a computer or other programmable data process apparatus, making the implementation of a series of steps on the computer or other programmable apparatus to implement the processes by the computer, such that the instructions executed on the computer or other programmable data process apparatus may provide steps that implement the functions specified in the one or more processes of the flowchart and/or the one or more blocks in the block diagram.

## Claims

1. A computer-implemented method for unlocking a terminal, by a first user who belongs to a first preset user group and by a plurality of second users each belonging to a respective second preset user group, the method comprising:
receiving an unlocking instruction (101, 201, 301, 401, 501, 601) by a current unlocking user, the unlocking instruction being based on character password information, pattern information;
determining whether the current unlocking user belongs to the first preset user group according to the unlocking instruction (102, 202, 302, 402, 502, 602); and
starting an information acquisition device if the current unlocking user does not belong to the first preset user group; and
acquiring, by the information acquisition device, the information on the current unlocking user; wherein, the information on the current unlocking user comprises biometric recognition information including face image information, voice information or fingerprint information of the current unlocking user; and
storing information on the current unlocking user if the current unlocking user does not belong to the first preset user group (303, 203, 603), **characterised in that** the unlocking method further comprises:
determining whether the current unlocking user belongs to a respective second preset user group with permission to use the terminal according to information on the current unlocking user (304) the information comprising biometric recognition information including face image information, voice information or fingerprint information;
unlocking a screen and entering a restricted user mode, if the current unlocking user belongs to the second preset user group (305); and
recording an operation of the current unlocking user in the restricted user mode; wherein (306),
in the restricted user mode, a system and/or applications of the terminal only respond to preset operations which comprise one or more of start, inquiry, modification, addition and/or deletion.

2. The method according to claim 1, wherein after the determining whether a current unlocking user belongs to a first preset user group according to the unlocking instruction (402, 502) the unlocking method further comprising:
unlocking the terminal if the current unlocking user belongs to the first preset user group (403, 503); and
displaying the stored information on and/or recorded operation of the unlocking user who does not belong to the first preset user group (404, 504).

3. The method according to claim 2, wherein after the displaying the recorded operation of the unlocking user who does not belong to the first preset user group (504), the method further comprising:
outputting prompt information to prompt whether to undo the operation (505); and
undoing the operation after the prompt information is confirmed (506).

4. The method according to claim 1, wherein after the acquiring and storing information on the current unlocking user if the current unlocking user does not belong to the first preset user group (603), the method further comprising:
determining whether the current unlocking user belongs to a second preset user group according to the information on the current unlocking user (604); and
entering a screen locked status if the current unlocking user does not belong to the second preset user group (605).

5. The method according to claim 1, wherein before the receiving an unlocking instruction (601, 501, 401, 301, 201, 101), the unlocking method further comprising:
determining whether to display a screen unlocking interface according to an inclined angle between a plane where an axis of the terminal is located and a horizontal plane; and
displaying the screen unlocking interface if the inclined angle is greater than or equals to a preset threshold.

6. The method according to claim 1, wherein the unlocking instruction is based on character password information, pattern information, face image information, voice information or fingerprint information.

7. An unlocking apparatus for unlocking a terminal by a first user who belongs to a first preset user group and by a plurality of second users each belonging to a respective second preset user group, the apparatus comprising:
a receiving module (1001), configured to receive an unlocking instruction (601, 501, 401, 301, 201, 101) by a current unlocking user, the unlocking instruction being based on character password information, pattern information;
a determination module (1002), configured to determine whether the current unlocking user belongs to the first preset user group according to the unlocking instruction (102, 202, 302, 402, 502, 602); and
an information acquisition process module (1003), configured to acquire and store information on the current unlocking user if the current unlocking user does not belong to the first preset user group (103, 203, 303, 603),
wherein the unlocking apparatus further comprises: an information acquisition device and a device starting module (1004); wherein,
the device starting module (1004) is configured to start the information acquisition device if the current unlocking user does not belong to the first preset user group (103, 203, 303, 603); and
the information acquisition device is configured to acquire the information on the current unlocking user, wherein, the information on the current unlocking user comprises biometric recognition information including face image information, voice information or fingerprint information of the current unlocking user, and **characterised in that** the unlocking apparatus further comprises:
a second determination module (1005), configured to determine whether the current unlocking user belongs to a respective second preset user group with permission to use the terminal according to information on the current unlocking user (604, 304) the information comprising biometric recognition information including face image information, voice information or fingerprint information;
a second unlocking module (1006), configured to unlock a screen and enter a restricted user mode, if the current unlocking user belongs to the second preset user group; and
a record process module (1007), configured to record an operation of the current unlocking user in the restricted user mode; wherein,
in the restricted user mode, a system and/or applications of the terminal only respond to preset operations which comprise start, inquiry, modification, addition and/or deletion.

8. The unlocking apparatus according to claim 7, wherein the unlocking apparatus further comprises:
a first unlocking module (1008), configured to unlock the terminal if the current unlocking user belongs to the first preset user group (503, 403); and
a display process module (1009), configured to display the stored information on and/or recorded operation of the unlocking user who does not belong to the first preset user group (404, 504).

9. The unlocking apparatus according to claim 8, wherein the unlocking apparatus further comprises:
an information output module (1010), configured to output prompt information to prompt whether to undo the operation (505); and
an undo process module (1011), configured to undo the operation after the prompt information is confirmed (506).

10. The unlocking apparatus according to claim 7, wherein the unlocking apparatus further comprises: a screen lock process module, configured to enter a screen locked status if the current unlocking user does not belong to the second preset user group.

11. The unlocking apparatus according to claim 7, wherein the unlocking apparatus further comprises:
a third determination module, configured to determine whether to display a screen unlocking interface according to an inclined angle between a plane where an axis of the terminal is located and a horizontal plane; and
an interface process module, configured to display the screen unlocking interface if the inclined angle is greater than or equals to a preset threshold.

12. The unlocking apparatus according to claim 7, wherein the unlocking instruction is based on character password information, pattern information, face image information, voice information or fingerprint information.

13. A terminal device, wherein the terminal device comprises a memory (120) and one or more programs stored in the memory, wherein the terminal device is configured to execute the one or more programs by one or more processors, the one or more programs containing instructions to perform the method of any one of claims 1 to 6.

14. A program product having stored therein instructions that, when executed by one or more processors (180) of a terminal, causes the terminal to perform the method of any one of claims 1 to 6.

15. A computer program which when executing on a processor (180), performs the method according to any one of claims 1 to 6.

## Patentansprüche

1. Computerimplementiertes Verfahren zur Entriegelung eines Endgeräts durch einen ersten Benutzer, der einer ersten vorgegeben Benutzergruppe angehört, und durch eine Vielzahl zweiter Benutzer, die jeweils einer jeweiligen zweiten vorgegeben Benutzertruppe angehören, wobei das Verfahren Folgendes umfasst:
Empfangen einer Entriegelungsanweisung (101, 201, 301, 401, 501, 601) seitens eines aktuellen entriegelnden Benutzers, wobei die Entriegelungsanweisung auf Informationen aus Zeichen bestehender Passwörter, Musterinformationen beruht;
Bestimmen gemäß der Entriegelungsanweisung, ob der aktuelle entriegelnde Benutzer der ersten vorgegeben Gruppe angehört (102, 202, 302, 402, 502, 602); und
Starten einer Informationserlangungsvorrichtung, wenn der aktuelle entriegelnde Benutzer nicht der ersten vorgegeben Benutzergruppe angehört; und
Erlangen,anhand der Informationserlangungsvorrichtung, der Informationen über den aktuellen entriegelnden Benutzer; wobei die Informationen über den aktuellen entriegelnden Benutzer biometrische Erkennungsinformationen umfassen, zu denen Gesichtsbildinformationen, Sprachinformationen oder Fingerabdruckinformationen des aktuellen entriegelnden Benutzer zählen; und
Speichern von Informationen über den aktuellen entriegelnden Benutzer, wenn der aktuelle entriegelnde Benutzer nicht der ersten vorgegeben Benutzergruppe angehört (303, 203, 603),
**dadurch gekennzeichnet, dass** das Entriegelungsverfahren Folgendes umfasst:
Bestimmen, ob der aktuelle entriegelnde Benutzer einer jeweiligen zweiten vorgegebenen Benutzergruppe angehört, mit der Erlaubnis, das Endgerät gemäß Informationen über den aktuellen entriegelnden Benutzer zu verwenden (304), wobei die Informationen biometrische Erkennungsinformationen umfassen, zu denen Gesichtsbildinformationen, Sprachinformationen oder Fingerabdruckinformationen zählen;
Entriegeln eines Bildschirms und Eintreten in einen eingeschränkten Benutzermodus, wenn der aktuelle entriegelnde Benutzer der zweiten vorgegebenen Benutzergruppe angehört (305); und
Aufzeichnen einer Operation des aktuellen entriegelnden Benutzers in dem eingeschränkten Benutzermodus; wobei (306)
in dem eingeschränkten Benutzermodus ein System und/oder Anwendungen des Endgeräts nur auf vorgegebene Operationen ansprechen, die eines oder mehrere von Start, Abfragen, Modifizieren, Hinzufügen und/oder Löschen umfassen.

2. Verfahren nach Anspruch 1, wobei nach dem Bestimmen, ob ein aktueller entriegelnder Benutzer einer ersten vorgegebenen Benutzergruppe angehört, gemäß der Entriegelungsanweisung (402, 502), das Entriegelungsverfahren ferner Folgendes umfasst:
Entriegeln des Endgeräts, wenn der aktuelle entriegelnde Benutzer der ersten vorgegebenen Benutzergruppe angehört (403, 503); und
Anzeigen der gespeicherten Informationen über und/oder der aufgezeichneten Operation durch den entriegelnden Benutzer, der nicht der ersten vorgegebenen Benutzergruppe angehört (404, 504).

3. Verfahren nach Anspruch 2, wobei nach dem Anzeigen der aufgezeichneten Operation des entriegelnden Benutzers, der nicht der ersten vorgegebenen Benutzergruppe angehört (504), das Verfahren ferner Folgendes umfasst:
Ausgeben einer Aufforderungsinformation, um aufzufordern, ob die Operation rückgängig zu machen ist (505); und
Rückgängigmachen der Operation, nachdem die Aufforderungsinformation bestätigt wurde (506).

4. Verfahren nach Anspruch 1, wobei nach dem Erlangen und Speichern von Informationen über den aktuellen entriegelnden Benutzer, wenn der aktuelle entriegelnde Benutzer nicht der ersten vorgegebenen Gruppe angehört (603), das Verfahren ferner Folgendes umfasst:
Bestimmen, ob der aktuelle entriegelnde Benutzer einer zweiten vorgegebenen Benutzergruppe angehört, gemäß den Informationen über den aktuellen entriegelnden Benutzer (604); und
Eintreten in einen Bildschirmverriegelungsstatus, wenn der aktuelle entriegelnde Benutzer nicht der zweiten vorgegebenen Benutzergruppe angehört (605).

5. Verfahren nach Anspruch 1, wobei das Entriegelungsverfahren vor dem Empfangen einer Entriegelungsanweisung (601, 501, 401, 301, 201, 101) ferner Folgendes umfasst:
Bestimmen, ob eine Bildschirmentriegelungsoberfläche angezeigt werden soll, gemäß einem Neigungswinkel zwischen einer Ebene, in der sich eine Achse des Endgeräts befindet, und einer horizontalen Ebene; und
Anzeigen der Bildschirmentriegelungsoberfläche, wenn der Neigungswinkel im Verhältnis zu einem vorgegebenen Schwellenwert größer oder gleich ist.

6. Verfahren nach Anspruch 1, wobei die Entriegelungsanweisung auf Informationen aus Zeichen bestehender Passwörter, Musterinformationen, Gesichtsbildinformationen, Sprachinformationen oder Fingerabdruckinformationen beruht.

7. Entriegelungseinrichtung zur Entriegelung eines Endgeräts durch einen ersten Benutzer, der einer ersten vorgegeben Benutzergruppe angehört, und durch eine Vielzahl zweiter Benutzer, die jeweils einer jeweiligen zweiten vorgegeben Benutzertruppe angehören, wobei die Einrichtung Folgendes umfasst:
ein Empfangsmodul (1001), das zum Empfangen einer Entriegelungsanweisung (601, 501, 401, 301, 201, 101) seitens eines aktuellen entriegelnden Benutzers konfiguriert ist, wobei die Entriegelungsanweisung auf Informationen aus Zeichen bestehender Passwörter, Musterinformationen beruht;
ein Bestimmungsmodul (1002), das zum Bestimmen gemäß der Entriegelungsanweisung, ob der aktuelle entriegelnde Benutzer der ersten vorgegeben Gruppe angehört (102, 202, 302, 402, 502, 602), konfiguriert ist; und
ein Informationserlangungsverarbeitungsmodul (1003), das zum Erlangen und Speichern von Informationen über den aktuellen entriegelnden Benutzer, wenn der aktuelle entriegelnde Benutzer nicht der ersten vorgegeben Benutzergruppe angehört (103, 203, 303, 603), konfiguriert ist,
wobei die Entriegelungseinrichtung ferner umfasst: eine Informationserlangungsvorrichtung und ein Vorrichtungsstartmodul (1004); wobei
das Vorrichtungsstartmodul (1004) dazu konfiguriert ist, die Informationserlangungsvorrichtung zu starten, wenn der aktuelle entriegelnde Benutzer nicht der ersten vorgegebenen Benutzergruppe angehört (103, 203, 303, 603); und
die Informationserlangungsvorrichtung dazu konfiguriert ist, die Informationen über den aktuellen entriegelnden Benutzer zu erlangen, wobei die Informationen über den aktuellen entriegelnden Benutzer biometrische Erkennungsinformationen umfassen, zu denen Gesichtsbildinformationen, Sprachinformationen oder Fingerabdruckinformationen des aktuellen entriegelnden Benutzer zählen, und
**dadurch gekennzeichnet, dass** die Entriegelungseinrichtung ferner Folgendes umfasst:
ein zweites Bestimmungsmodul (1005), das zum Bestimmen konfiguriert ist, ob der aktuelle entriegelnde Benutzer einer jeweiligen zweiten vorgegebenen Benutzergruppe angehört, mit der Erlaubnis, das Endgerät gemäß Informationen über den aktuellen entriegelnden Benutzer zu verwenden (604, 304), wobei die Informationen biometrische Erkennungsinformationen umfassen, zu denen Gesichtsbildinformationen, Sprachinformationen oder Fingerabdruckinformationen zählen;
ein zweites Entriegelungsmodul (1006), das zum Entriegeln eines Bildschirms und Eintreten in einen eingeschränkten Benutzermodus, wenn der aktuelle entriegelnde Benutzer der zweiten vorgegebenen Benutzergruppe angehört, konfiguriert ist; und
ein Aufzeichnungsverarbeitungsmodul (1007), das zum Aufzeichnen einer Operation des aktuellen entriegelnden Benutzers in dem eingeschränkten Benutzermodus konfiguriert ist; wobei
in dem eingeschränkten Benutzermodus ein System und/oder Anwendungen des Endgeräts nur auf vorgegebene Operationen ansprechen, die eines oder mehrere von Start, Abfragen, Modifizieren, Hinzufügen und/oder Löschen umfassen.

8. Entriegelungseinrichtung nach Anspruch 7, wobei die Entriegelungseinrichtung ferner Folgendes umfasst:
ein erstes Entriegelungsmodul (1008), das zum Entriegeln des Endgeräts, wenn der aktuelle entriegelnde Benutzer der ersten vorgegebenen Benutzergruppe angehört (503, 403) angehört, konfiguriert ist; und
ein Anzeigenverarbeitungsmodul (1009), das dazu konfiguriert ist, die gespeicherten Informationen über und/oder aufgezeichnete Operation durch den entriegelnden Benutzer anzuzeigen, der nicht der ersten vorgegebenen Gruppe angehört (404, 504).

9. Entriegelungseinrichtung nach Anspruch 8, wobei die Entriegelungseinrichtung ferner Folgendes umfasst:
ein Informationsausgabemodul (1010), das zum Ausgeben einer Aufforderungsinformation konfiguriert ist, um aufzufordern, ob die Operation rückgängig zu machen ist (505); und
ein Rückgängigmachen-Verarbeitungsmodul (1011), das dazu konfiguriert ist, die Operation rückgängig zu machen, nachdem die Aufforderungsinformation bestätigt wurde (506).

10. Entriegelungseinrichtung nach Anspruch 7, wobei die Entriegelungseinrichtung ferner Folgendes umfasst: ein Bildschirmverriegelungsverarbeitungsmodul, das dazu konfiguriert ist, in einen Bildschirm-verriegelt-Status einzutreten, wenn der aktuelle entriegelnde Benutzer nicht der zweiten vorgegebenen Benutzergruppe angehört.

11. Entriegelungseinrichtung nach Anspruch 7, wobei die Entriegelungseinrichtung ferner Folgendes umfasst:
ein drittes Bestimmungsmodul, das dazu konfiguriert ist, zu bestimmen, ob eine Bildschirmentriegelungsoberfläche angezeigt werden soll, gemäß einem Neigungswinkel zwischen einer Ebene, in der sich eine Achse des Endgeräts befindet, und einer horizontalen Ebene; und
ein Oberflächenverarbeitungsmodul, das zum Anzeigen der Bildschirmentriegelungsoberfläche konfiguriert ist, wenn der Neigungswinkel im Verhältnis zu einem vorgegebenen Schwellenwert größer oder gleich ist.

12. Entriegelungseinrichtung nach Anspruch 7, wobei die Entriegelungsanweisung auf Informationen aus Zeichen bestehender Passwörter, Musterinformationen, Gesichtsbildinformationen, Sprachinformationen oder Fingerabdruckinformationen beruht.

13. Endgerätvorrichtung, wobei die Endgerätvorrichtung einen Speicher (120) und ein oder mehrere in dem Speicher gespeicherte Programme umfasst, wobei die Endgerätvorrichtung dazu konfiguriert ist, das eine oder die mehreren Programme durch einen oder mehrere Prozessoren auszuführen, wobei das eine oder die mehreren Programme Anweisungen zum Durchführen des Verfahrens nach einem der Ansprüche 1 bis 6 enthalten.

14. Programmprodukt mit darin gespeicherten Anweisungen, das, wenn es durch einen oder mehrere Prozessoren (180) eines Endgeräts ausgeführt wird, das Endgerät dazu veranlasst, das Verfahren nach einem der Ansprüche 1 bis 6 durchzuführen.

15. Computerprogramm, das, wenn es in einem Prozessor (180) ausgeführt wird, das Verfahren nach einem der Ansprüche 1 bis 6 durchführt.

## Revendications

1. Procédé mis en oeuvre par ordinateur permettant de déverrouiller un terminal, par un premier utilisateur appartenant à un premier groupe d'utilisateurs prédéfini et par une pluralité de seconds utilisateurs appartenant chacun à un second groupe d'utilisateurs prédéfini respectif, le procédé comprenant :
la réception d'une instruction de déverrouillage (101, 201, 301, 401, 501, 601) par un utilisateur de déverrouillage actuel, l'instruction de déverrouillage étant basée sur des informations de mot de passe à caractères, des informations de configuration ;
le fait de déterminer si l'utilisateur de déverrouillage actuel appartient au premier groupe d'utilisateurs prédéfini selon l'instruction de déverrouillage (102, 202, 302, 402, 502, 602) ; et
le démarrage d'un dispositif d'acquisition d'informations si l'utilisateur de déverrouillage actuel n'appartient pas au premier groupe d'utilisateurs prédéfini ; et
l'acquisition, par le dispositif d'acquisition d'informations, des informations sur l'utilisateur de déverrouillage actuel ; dans lequel, les informations sur l'utilisateur de déverrouillage actuel comprennent des informations de reconnaissance biométrique incluant des informations d'image de visage, des informations vocales ou des informations d'empreintes digitales de l'utilisateur de déverrouillage actuel ; et
le stockage d'informations sur l'utilisateur de déverrouillage actuel si l'utilisateur de déverrouillage actuel n'appartient pas au premier groupe d'utilisateurs prédéfini (303, 203, 603), **caractérisé en ce que** le procédé de déverrouillage comprend en outre :
le fait de déterminer si l'utilisateur de déverrouillage actuel appartient à un second groupe d'utilisateurs prédéfini avec l'autorisation d'utiliser le terminal selon des informations sur l'utilisateur de déverrouillage actuel (304), les informations comprenant des informations de reconnaissance biométrique incluant des informations d'image de visage, des informations vocales ou des informations d'empreintes digitales ;
le déverrouillage d'un écran et l'entrée dans un mode utilisateur restreint, si l'utilisateur de déverrouillage actuel appartient au second groupe d'utilisateurs prédéfini (305) ; et
l'enregistrement d'une opération de l'utilisateur de déverrouillage actuel dans le mode utilisateur restreint ; dans lequel (306),
dans le mode utilisateur restreint, un système et/ou des applications du terminal répondent uniquement à des opérations prédéfinies qui comprennent une ou plusieurs opérations parmi le démarrage, l'interrogation, la modification, l'ajout et/ou la suppression.

2. Procédé selon la revendication 1, dans lequel après avoir déterminé si un utilisateur de déverrouillage actuel appartient à un premier groupe d'utilisateurs prédéfini selon l'instruction de déverrouillage (402, 502), le procédé de déverrouillage comprend en outre :
le déverrouillage du terminal si l'utilisateur de déverrouillage actuel appartient au premier groupe d'utilisateurs prédéfini (403, 503) ; et
l'affichage des informations stockées sur et/ou de l'opération enregistrée de l'utilisateur de déverrouillage qui n'appartient pas au premier groupe d'utilisateurs prédéfini (404, 504).

3. Procédé selon la revendication 2, dans lequel après l'affichage de l'opération enregistrée de l'utilisateur de déverrouillage qui n'appartient pas au premier groupe d'utilisateurs prédéfini (504), le procédé comprend en outre :
l'émission d'informations d'invite pour demander si l'opération doit être annulée (505) ; et
l'annulation de l'opération après la confirmation des informations d'invite (506).

4. Procédé selon la revendication 1, dans lequel après l'acquisition et le stockage d'informations sur l'utilisateur de déverrouillage actuel si l'utilisateur de déverrouillage actuel n'appartient pas au premier groupe d'utilisateurs prédéfini (603), le procédé comprend en outre :
le fait de déterminer si l'utilisateur de déverrouillage actuel appartient à un second groupe d'utilisateurs prédéfini selon les informations sur l'utilisateur de déverrouillage actuel (604) ; et
l'entrée dans un état verrouillé d'écran si l'utilisateur de déverrouillage actuel n'appartient pas au second groupe d'utilisateurs prédéfini (605).

5. Procédé selon la revendication 1, dans lequel, avant la réception d'une instruction de déverrouillage (601, 501, 401, 301, 201, 101), le procédé de déverrouillage comprend en outre :
le fait de déterminer s'il convient d'afficher une interface de déverrouillage d'écran selon un angle incliné entre un plan où se trouve un axe du terminal et un plan horizontal ; et
l'affichage de l'interface de déverrouillage d'écran si l'angle incliné est supérieur ou égal à un seuil prédéfini.

6. Procédé selon la revendication 1, dans lequel l'instruction de déverrouillage est basée sur des informations de mot de passe à caractères, des informations de configuration, des informations d'image de visage, des informations vocales ou des informations d'empreintes digitales.

7. Appareil de déverrouillage permettant de déverrouiller un terminal par un premier utilisateur appartenant à un premier groupe d'utilisateurs prédéfini et par une pluralité de seconds utilisateurs appartenant chacun à un second groupe d'utilisateurs prédéfini respectif, l'appareil comprenant :
un module de réception (1001), conçu pour recevoir une instruction de déverrouillage (601, 501, 401, 301, 201, 101) par un utilisateur de déverrouillage actuel, l'instruction de déverrouillage étant basée sur des informations de mot de passe à caractères, des informations de configuration ;
un module de détermination (1002), conçu pour déterminer si l'utilisateur de déverrouillage actuel appartient au premier groupe d'utilisateurs prédéfini selon l'instruction de déverrouillage (102, 202, 302, 402, 502, 602) ; et
un module de traitement d'acquisition d'informations (1003), conçu pour acquérir et stocker des informations sur l'utilisateur de déverrouillage actuel si l'utilisateur de déverrouillage actuel n'appartient pas au premier groupe d'utilisateurs prédéfini (103, 203, 303, 603),
dans lequel l'appareil de déverrouillage comprend en outre : un dispositif d'acquisition d'informations et un module de démarrage de dispositif (1004) ; dans lequel,
le module de démarrage de dispositif (1004) est conçu pour démarrer le dispositif d'acquisition d'informations si l'utilisateur de déverrouillage actuel n'appartient pas au premier groupe d'utilisateurs prédéfini (103, 203, 303, 603) ; et
le dispositif d'acquisition d'informations est conçu pour acquérir les informations sur l'utilisateur de déverrouillage actuel, dans lequel, les informations sur l'utilisateur de déverrouillage actuel comprennent des informations de reconnaissance biométrique incluant des informations d'image de visage, des informations vocales ou des informations d'empreintes digitales de l'utilisateur de déverrouillage actuel, et
**caractérisé en ce que** l'appareil de déverrouillage comprend en outre :
un deuxième module de détermination (1005), conçu pour déterminer si l'utilisateur de déverrouillage actuel appartient à un second groupe d'utilisateurs prédéfini avec l'autorisation d'utiliser le terminal selon des informations sur l'utilisateur de déverrouillage actuel (604, 304), les informations comprenant des informations de reconnaissance biométrique incluant des informations d'image de visage, des informations vocales ou des informations d'empreintes digitales ;
un second module de déverrouillage (1006), conçu pour déverrouiller un écran et entrer dans un mode utilisateur restreint, si l'utilisateur de déverrouillage actuel appartient au second groupe d'utilisateurs prédéfini ; et
un module de traitement d'enregistrement (1007), conçu pour enregistrer une opération de l'utilisateur de déverrouillage actuel dans le mode utilisateur restreint ; dans lequel,
dans le mode utilisateur restreint, un système et/ou des applications du terminal répondent uniquement à des opérations prédéfinies qui comprennent le démarrage, l'interrogation, la modification, l'ajout et/ou la suppression.

8. Appareil de déverrouillage selon la revendication 7, dans lequel l'appareil de déverrouillage comprend en outre :
un premier module de déverrouillage (1008), conçu pour déverrouiller le terminal si l'utilisateur de déverrouillage actuel appartient au premier groupe d'utilisateurs prédéfini (503, 403) ; et
un module de traitement d'affichage (1009), conçu pour afficher les informations stockées sur et/ou l'opération enregistrée de l'utilisateur de déverrouillage qui n'appartient pas au premier groupe d'utilisateurs prédéfini (404, 504).

9. Appareil de déverrouillage selon la revendication 8, dans lequel l'appareil de déverrouillage comprend en outre :
un module de sortie d'informations (1010), conçu pour émettre des informations d'invite pour demander si l'opération doit être annulée (505) ; et
un module de traitement d'annulation (1011), conçu pour annuler l'opération après la confirmation des informations d'invite (506).

10. Appareil de déverrouillage selon la revendication 7, dans lequel l'appareil de déverrouillage comprend en outre : un module de traitement de verrouillage d'écran, conçu pour entrer dans un état verrouillé d'écran si l'utilisateur de déverrouillage actuel n'appartient pas au second groupe d'utilisateurs prédéfini.

11. Appareil de déverrouillage selon la revendication 7, dans lequel l'appareil de déverrouillage comprend en outre :
un troisième module de détermination, conçu pour déterminer s'il convient d'afficher une interface de déverrouillage d'écran selon un angle incliné entre un plan où se trouve un axe du terminal et un plan horizontal ; et
un module de traitement d'interface, conçu pour afficher l'interface de déverrouillage d'écran si l'angle incliné est supérieur ou égal à un seuil prédéfini.

12. Appareil de déverrouillage selon la revendication 7, dans lequel l'instruction de déverrouillage est basée sur des informations de mot de passe à caractères, des informations de configuration, des informations d'image de visage, des informations vocales ou des informations d'empreintes digitales.

13. Dispositif terminal, dans lequel le dispositif terminal comprend une mémoire (120) et un ou plusieurs programmes stockés dans la mémoire, dans lequel le dispositif terminal est conçu pour exécuter les un ou plusieurs programmes par un ou plusieurs processeurs, les un ou plusieurs programmes contenant des instructions pour mettre en oeuvre le procédé selon l'une quelconque des revendications 1 à 6.

14. Produit programme dans lequel sont stockées des instructions qui, lorsqu'elles sont exécutées par un ou plusieurs processeurs (180) d'un terminal, amènent le terminal à mettre en oeuvre le procédé selon l'une quelconque des revendications 1 à 6.

15. Programme informatique qui, lorsqu'il est exécuté sur un processeur (180), met en oeuvre le procédé selon l'une quelconque des revendications 1 à 6.
